# EUROPEAN PATENT APPLICATION

(11) **EP 4 545 723 A1**
(43) Date of publication of application: **30.04.2025**
(21) Application number: 23827143.1
(22) Date of filing: 16.06.2023
(51) Int. Cl.: E04C 2/12, B27M 3/00, E04C 2/30

(54) **PLANAR MEMBER**

(30) Priority: 22.06.2022 JP 2022100585
(71) Applicant: Nature Architects Inc., Tokyo 103-0011 (JP)
(72) Inventor: TANIMICHI, Kotaro, Tokyo 103-0011 (JP); OHSHIMA, Taisuke, Tokyo 103-0011 (JP); NATSUME, Hiroaki, Tokyo 103-0011 (JP)
(74) Representative: Kuhnen & Wacker Patent- und Rechtsanwaltsbüro PartG mbB
(86) International application number: PCT/JP2023/022474
(87) International publication number: WO 2023/248959

(57) **Abstract**

A planar member that is integrally formed and capable of being used in a twisted state around an axis extending in a predetermined direction, the planar member includes one or more column portions extending in the predetermined direction, a plurality of branch portions, each connected to the one or more column portions, and a plurality of surface portions, each of which has a gap with the one or more column portions and is connected to one of the branch portions.

## Description

### Technical Field

The present disclosure relates to a planar member.

### Background

A plate member made of wood or other materials are known. In addition, a curved panel, in which a plurality of parallel grooves are formed on both sides of such a plate member and the panel is curved into an arc shape, is disclosed in Patent Document 1.

### Citation List

### Patent Document

PTL 1: Japanese Utility Model Publication No. H06-009769

### Summary

When considering twisting a plate member formed of wood or other materials around an axis extending in a predetermined direction, it may be difficult to twist the plate member to a relatively large extent due to its relatively high torsional stiffness. In contrast, while it is conceivable to process the plate member into shapes such as a cross-lattice structure or a configuration in which column portions extending in the predetermined direction are alternately connected to rectangular frame portions, in these cases, not only would the torsional stiffness be reduced, but the axial stiffness in the predetermined direction would also be reduced. For these reasons, it was difficult to reduce the torsional stiffness while maintaining the axial stiffness. Although Patent Document 1 discloses the curved panel in which the grooves are formed on both sides of the plate member to curve it into the arc shape, this does not facilitate twisting the plate member.

A main object of a planar member according to the present disclosure is to reduce torsional stiffness while ensuring axial stiffness in a predetermined direction.

In order to achieve the above main object, a planar member according to the present disclosure employs the following configuration.

A planar member according to the present disclosure is a planar member that is integrally formed and capable of being used in a twisted state around an axis extending in a predetermined direction.
The planar member includes one or more column portions extending in the predetermined direction, a plurality of branch portions, each connected to the one or more column portions, and a plurality of surface portions, each of which has a gap with the one or more column portions and is connected to one of the branch portions.

The planar member according to the present disclosure includes the one or more column portions extending in the predetermined direction, which ensures stiffness in the predetermined direction (axial stiffness). In addition, the planar member includes the plurality of surface portions, each connected to the one or more column portions via one of the branch portions, which results in a smaller cross-sectional area for torsion around the axis extending in the predetermined direction, as compared to a plate member, thereby reducing torsional stiffness. That is, it is possible to reduce torsional stiffness while ensuring axial stiffness in the predetermined direction. Furthermore, by including the plurality of surface portions, the planar member ensures aesthetic design as a planar member when used in applications such as construction.

### Brief Description of Drawings

Fig. 1 is a front view of a planar member 20 according to one embodiment of the present disclosure.
Fig. 2 is an external perspective view of the planar member 20.
Fig. 3 is a diagram illustrating twisting behavior of the planar member 20.
Fig. 4 is an external perspective view of a plate member 20B according to a comparative example.
Fig. 5 is an external perspective view of a structure 20C according to another comparative example.
Fig. 6 is a diagram illustrating twisting behavior of the plate member 20B.
Fig. 7 is a diagram illustrating twisting behavior of the structure 20C.
Fig. 8 is a front view of a planar member 120 according to a modification.
Fig. 9 is an external perspective view of the planar member 120.
Fig. 10 is a diagram illustrating twisting behavior of the planar member 120.
Fig. 11 is a front view of a planar member 220 according to another modification.
Fig. 12 is an external perspective view of the planar member 220.
Fig. 13 is a diagram illustrating twisting behavior of the planar member 220.
Fig. 14 is a front view of a planar member 320 according to yet another modification.
Fig. 15 is an external perspective view of the planar member 320.
Fig. 16 is a front view of a planar member 420 according to yet another modification.
Fig. 17 is an external perspective view of the planar member 420.
Fig. 18 is a front view of a planar member 520 according to yet another modification.
Fig. 19 is an external perspective view of the planar member 520.
Fig. 20 is a diagram illustrating twisting behavior of the planar member 520.

### Description of Embodiments

Next, some aspects of the present disclosure will be described with reference to embodiments.

### EMBODIMENT

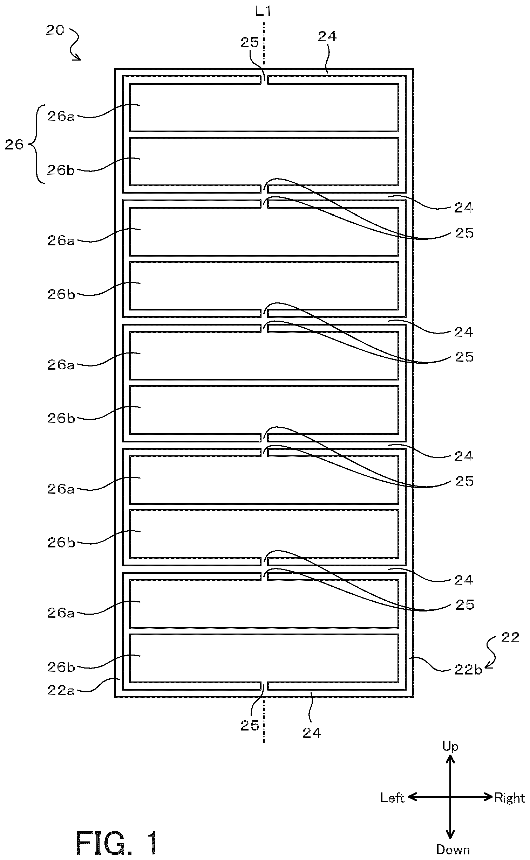

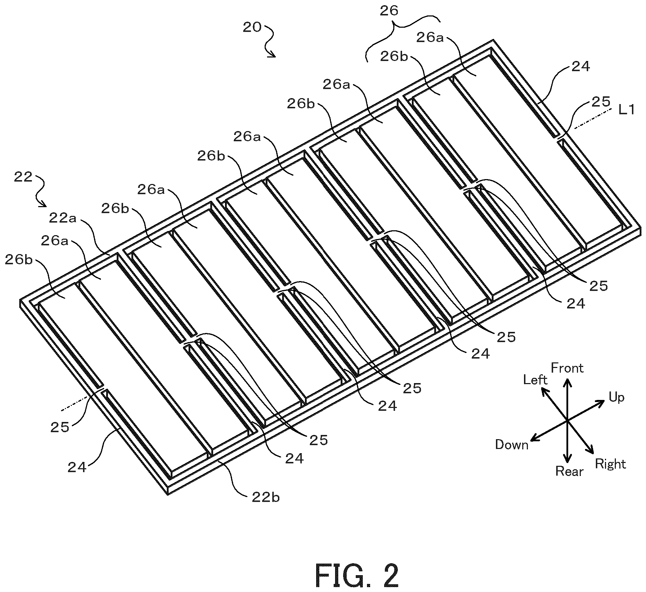

Fig. 1 is a front view of a planar member 20 according to one embodiment of the present disclosure, and Fig. 2 is an external perspective view of the planar member 20. The up-down direction (longitudinal direction), left-right direction (short direction), and front-rear direction (thickness direction) of the planar member 20 are as shown in Figs. 1 and 2. In Figs. 1 and 2, the axis L1 is a line that connects the centers of the front-rear direction and the left-right direction at any position in the up-down direction of the planar member 20, extending in the up-down direction.

As shown in Figs. 1 and 2, the planar member 20 according to the embodiment is integrally formed as a whole into a rectangular flat plate shape with a constant thickness (length in the front-rear direction). The planar member 20 is, for example, formed by methods such as injection molding, blow molding, extrusion molding, 3D printing using resin materials, or casting, forging, pressing, cutting, extrusion molding, or 3D printing using metal materials. Alternatively, it may be formed by perforating a resin plate, a metal plate, a wooden plate, or the like. When the planar member 20 is used in construction or the like, it is often made of wood, specifically, by perforating a wooden plate.

The planar member 20 includes two column portions 22 (22a, 22b), six branch portions 24, ten branch portions 25, and ten surface portions 26. The two column portions 22a and 22b are arranged at intervals between them in the left-right direction (short direction), and each extends in the up-down direction (longitudinal direction) with the same length. The six branch portions 24 are arranged at intervals between them in the up-down direction and extend in the left-right direction with the same length, connecting the column portions 22a and 22b. The uppermost branch portion 24 connects the upper ends of the column portions 22a and 22b, while the lowermost branch portion 24 connects the lower ends of the column portions 22a and 22b, thereby forming a rectangular outer shape for the planar member 20.

The ten surface portions 26 are arranged between two adjacent branch portions 24 in the up-down direction, with two surface portions (upper surface portions 26a and lower surface portions 26b in pairs) positioned in each interval. The surface portions 26 are each formed in the same rectangular shape. In each pair, the central part of the upper edge (top) of the upper surface portion 26a in the left-right direction is connected, through the corresponding branch portion 25, to the central part of the upper branch portion 24 in the left-right direction. Similarly, the central part of the lower edge (bottom) of the lower surface portion 26b in the left-right direction is connected, through the corresponding branch portion 25, to the central part of the lower branch portion 24 in the left-right direction. The ten branch portions 25 each extend in the up-down direction. In each pair, the left edge (left side) of the surface portions 26a and 26b has a gap with the column portion 22a, while the right edge (right side) of the surface portions 26a and 26b has a gap with the column portion 22b. The upper edge (top) of the surface portion 26a in each pair has a gap with the upper branch portion 24, except for the central part in the left-right direction (the connection point with the branch portion 25). Similarly, the lower edge (bottom) of the surface portion 26b has a gap with the lower branch portion 24, except for the central part in the left-right direction (the connection point with the branch portion 25). There is a gap between the lower edge (bottom) of the surface portion 26a and the upper edge (top) of the surface portion 26b in each pair. In the planar member 20 according to the embodiment, by including ten surface portions 26, it presents the appearance of a single planar member as a whole, thereby ensuring aesthetic design as a planar member when used in applications such as construction. In the embodiment, the widths of the two column portions 22a and 22b, the widths of the six branch portions 24, the widths and lengths of the ten branch portions 25, and the widths of the gaps are all designed to be approximately the same. Of course, these do not necessarily have to be identical, and for example, the width of the two column portions 22a and 22b may be wider than the other widths.

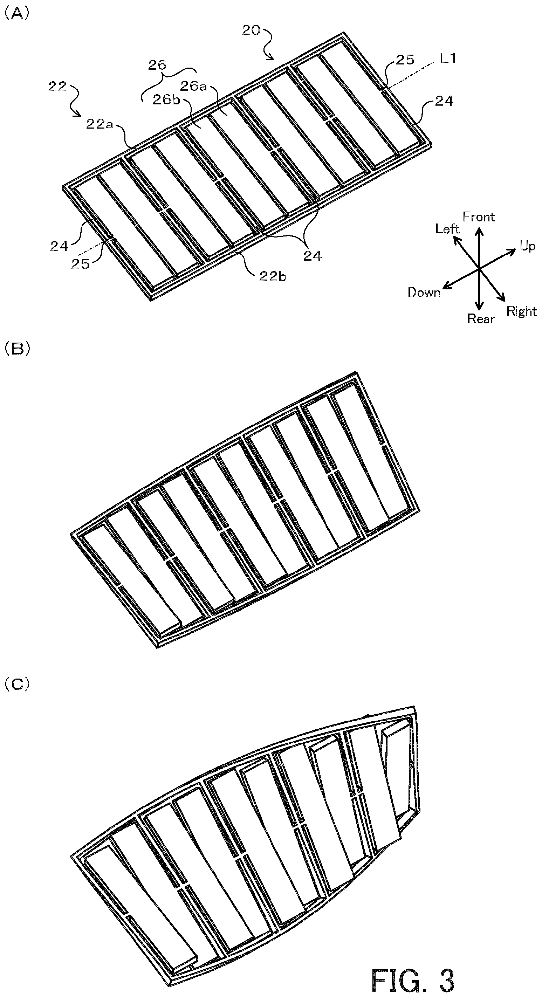

Fig. 3 is a diagram illustrating twisting behavior of the planar member 20. Fig. 3(A) shows the reference state of the planar member 20 (similar to Fig. 2), and Figs. 3(B) and 3(C) respectively show the states where the planar member 20 is twisted by 45 degrees and 90 degrees around the axis L1 from the reference state. From Fig. 3, it can be seen that as the planar member 20 twists, the two column portions 22a and 22b, along with the ten surface portions 26, each deform. This is because the two column portions 22a and 22b, and the ten surface portions 26 are connected not directly, but through the branch portions 24 and 25.

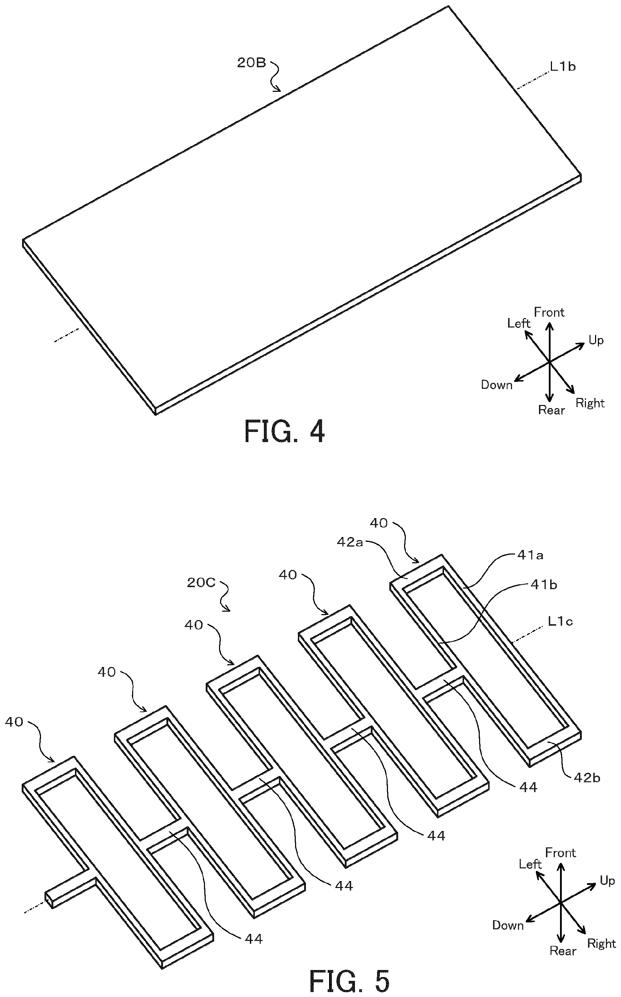

Fig. 4 is an external perspective view of a plate member 20B according to a comparative example, and Fig. 5 is an external perspective view of a structure 20C according to another comparative example. In Figs. 4 and 5, the axes L1b and L1c are lines that connect the centers in the front-rear direction and the left-right direction at any position in the up-down direction of the plate member 20B or the structure 20C, extending in the up-down direction. The plate member 20B shown in Fig. 4 and the structure 20C shown in Fig. 5 are formed with lengths in the up-down direction (longitudinal direction), left-right direction (lateral direction), and front-rear direction (thickness direction) similar to those of the planar member 20 in the embodiment.

The plate member 20B shown in Fig. 4 is integrally formed as a whole into a rectangular flat plate shape with a constant thickness. The structure 20C shown in Fig. 5 is integrally formed as a whole into a rectangular flat plate shape with a constant thickness, and includes five rectangular frame portions 40 and five column portions 44. In the structure 20C, the rectangular frame portions 40 and the column portions 44 are alternately connected. The five rectangular frame portions 40 are each formed in a rectangular frame shape and include a pair of left-right extending portions 41a and 41b, and a pair of up-down extending portions 42a and 42b. The pair of left-right extending portions 41a and 41b are arranged at intervals in the following order from the top, extending in the left-right direction. The pair of up-down extending portions 42a and 42b are connected to the left and right ends of the pair of left-right extending portions 41a and 41b, respectively, and extend in the up-down direction. Of the five column portions 44, four column portions 44 from the top are each connected between the central parts of the left-right extending portions 41b of the upper rectangular frame portion 40 and the left-right extending portions 41a of the lower rectangular frame portion 40, and extend in the up-down direction. The lowest column portion 44 is connected to the central part of the left-right extending portion 41b of the lowest rectangular frame portion 40 and extends in the up-down direction. In this structure 20C, the pair of left-right extending portions 41a and 41b are prone to bending in the up-down direction due to their own weight and other factors. While the plate member 20B ensures aesthetic design as a planar member when used in applications such as construction, the structure 20C, which lacks one or more surface portions, cannot be said to ensure the same level of aesthetic design.

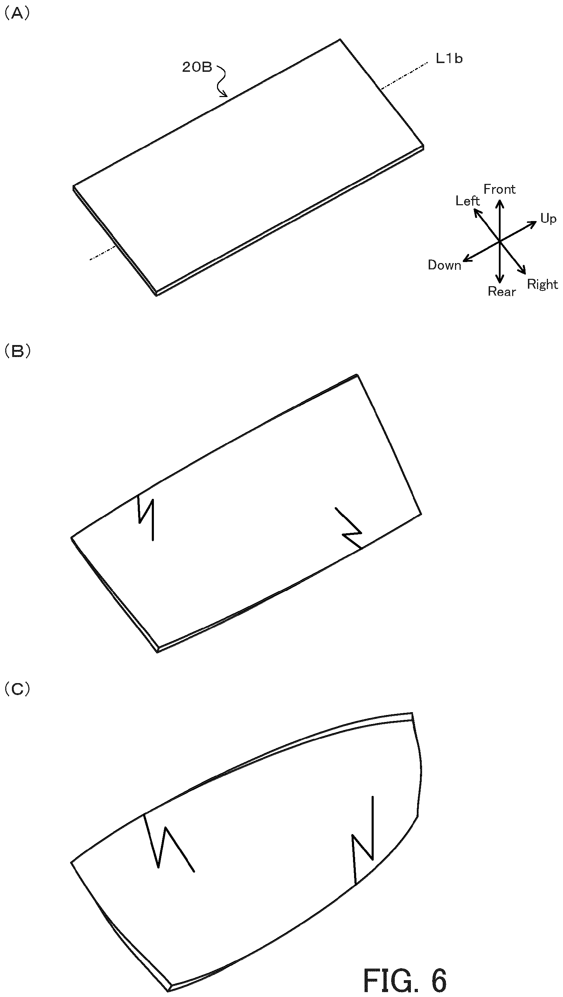

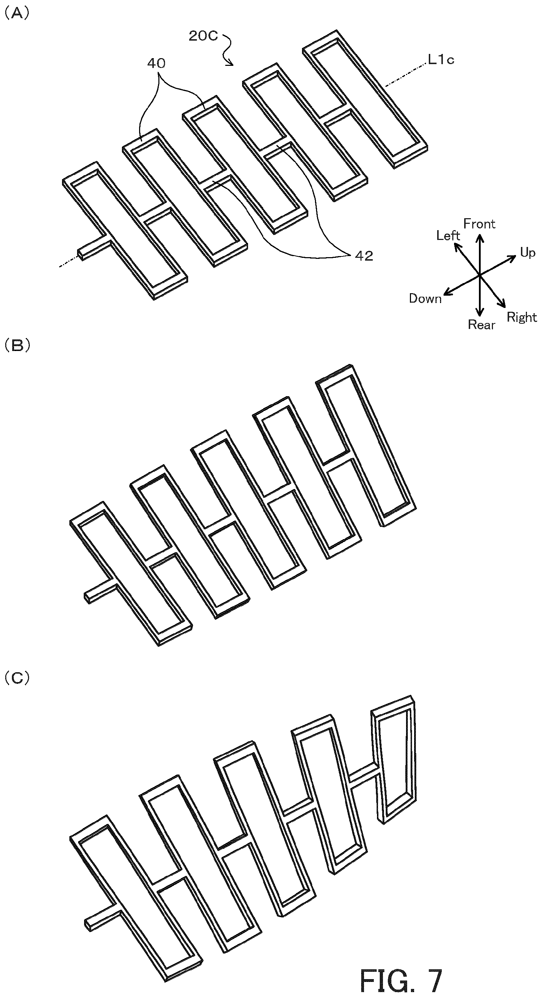

Fig. 6 is a diagram illustrating twisting behavior of the plate member 20B. Fig. 7 is a diagram illustrating twisting behavior of the structure 20C. Fig. 6(A) shows the reference state of the plate member 20B (similar to Fig. 4), while Figs. 6(B) and 6(C) respectively show the states where the plate member 20B is twisted by 45 degrees and 90 degrees around axis L1b from the reference state. Fig. 7(A) shows the reference state of the structure 20C (similar to Fig. 5), while Figs. 7(B) and 7(C) respectively show the states where the structure 20C is twisted by 45 degrees and 90 degrees around axis L1c from the reference state.

The plate member 20B according to the comparative example extends as a whole in the up-down direction (longitudinal direction), resulting in relatively high axial stiffness in the up-down direction. Additionally, the plate member 20B has a relatively large cross-sectional area (the total cross-sectional area of the plate member 20B) around the axis L1 (see Fig. 6), which contributes to relatively high torsional stiffness as well. In Figs. 6(B) and 6(C), the plate member 20B is shown in the twisted states around the axis L1 for reference. However, this does not indicate that the plate member 20B according to the comparative example is capable of being twisted by 45 degrees or 90 degrees around the axis L1 as shown. Since the plate member 20B has relatively high torsional stiffness around the axis L1 and is less likely to undergo torsional deformation, even if a torsional moment is applied around the axis L1 to twist the plate member 20B to a twisting angle of 45 degrees or 90 degrees as shown, it is highly likely that cracks or fracture will occur in the plate member 20B before reaching such angles. For reference, an example of this behavior is shown in Figs. 6(B) and 6(C).

The structure 20C according to the comparative example has relatively low axial stiffness in the up-down direction because the pair of left-right extending portions 41a and 41b of the five rectangular frame portions 40 are easily deflected in the up-down direction. Additionally, the structure 20C has relatively low torsional stiffness because the cross-sectional area for torsion around the axis L1c (the cross-sectional area of the five rectangular frame portions 40 and five branch portions) is relatively small compared to the plate member 20B (see Fig. 7). Furthermore, since the structure 20C according to the comparative example is not a planar member but rather a structure where rectangular frame portions 40 are connected, it does not ensure the same level of aesthetic design as a planar member when used in applications such as construction.

In contrast, the planar member 20 according to the embodiment includes the two column portions 22a and 22b that extend in the up-down direction, which results in relatively high axial stiffness in the up-down direction. Additionally, the planar member 20 has a relatively small cross-sectional area for torsion around the axis L1 (primarily the cross-sectional area of the two column portions 22a and 22b and the six branch portions 24) compared to the plate member 20B (see Fig. 3), which results in relatively low torsional stiffness. That is, the planar member 20 ensures the axial stiffness in the up-down direction while reducing the torsional stiffness.

As described above, the planar member 20 according to the embodiment includes the two column portions 22 (22a, 22b) extending in the up-down direction (longitudinal direction), the six branch portions 24 each connecting to the column portions 22a and 22b, and the plurality of surface portions 26, each of which has a gap with the column portions 22a and 22b and is connected to one of the branch portions 24 via the corresponding branch portion 25. This configuration allows for achieving low torsional stiffness while ensuring axial stiffness in the up-down direction. Furthermore, the planar member 20 ensures aesthetic design as a planar member when used in applications such as construction.

Moreover, the planar member 20 according to the embodiment includes the two column portions 22. This configuration increases the axial stiffness and bending stiffness with respect to bending deformation along the extending direction of the planar member 20, compared to the case where only single column portion is included, thus suppressing axial expansion or contraction and bending along the extending direction. Additionally, compared to the case where three or more column portions are included, this configuration reduces the torsional stiffness, making it easier to achieve relatively large torsion.

In the embodiment, the planar member 20 is described as including the two column portions 22, ten surface portions 26, six branch portions 24, and ten branch portions 25. However, this is not limited to this. The following describes planar members 120, 220, 320, 420, and 520 according to modifications in turn.

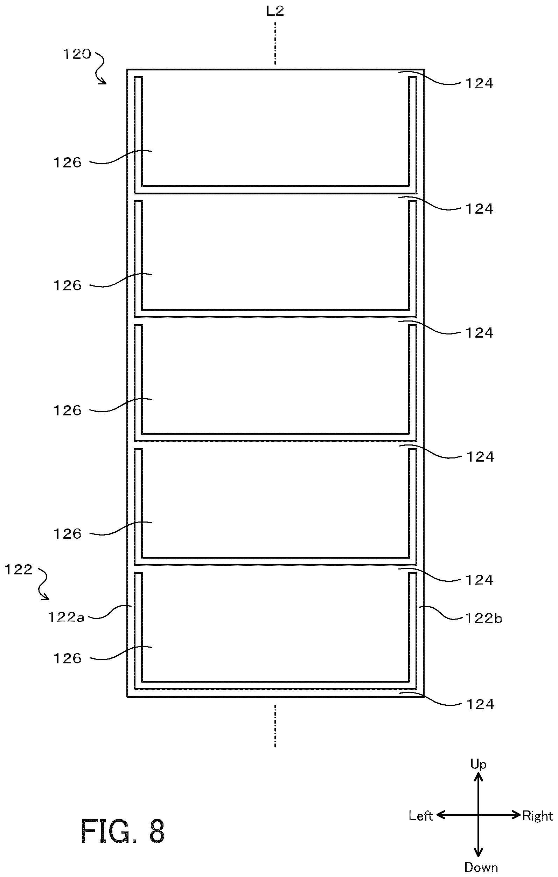

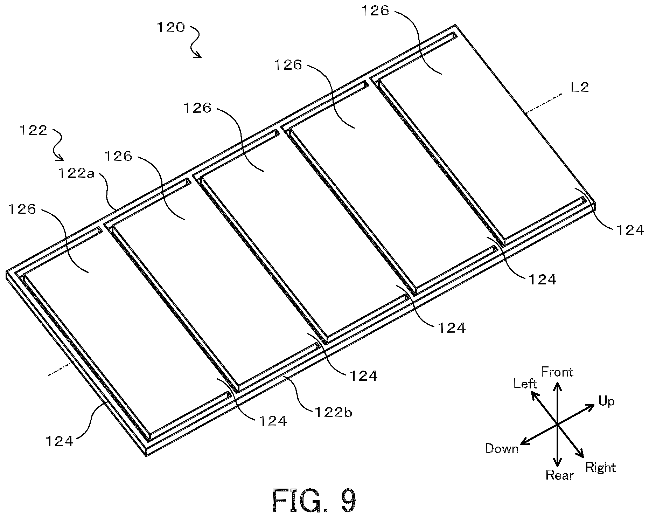

The planar member 120 according to the modification will be described. Fig. 8 is a front view of the planar member 120, and Fig. 9 is an external perspective view of the planar member 120. In Figs. 8 and 9, the axis L2 is a line that connects the centers in the front-rear direction and the left-right direction at any position in the up-down direction of the planar member 120, extending in the up-down direction. As shown in Figs. 8 and 9, the planar member 120 according to the modification is integrally formed as a whole into a rectangular flat plate shape with a constant thickness (length in the front-rear direction) and includes two column portions 122 (122a, 122b), six branch portions 124, and five surface portions 126.

The two column portions 122a and 122b are arranged at intervals between them in the left-right direction (short direction) and each extends in the up-down direction (longitudinal direction) with the same length. The six branch portions 124 are arranged at intervals between them in the up-down direction and extend in the left-right direction with the same length, connecting the column portions 122a and 122b. The uppermost branch portion 124 connects the upper ends of the column portions 122a and 122b, while the lowermost branch portion 124 connects the lower ends of the column portions 122a and 122b, thereby forming a rectangular outer shape for the planar member 120.

The five surface portions 126 are each arranged below the corresponding branch portion 124 and are each formed in the same rectangular shape. The entire upper edge (top side) of each surface portion 126 is connected to the upper branch portion 124. The left edge (left side) of each surface portion 126 has a gap with the column portion 122a, the right edge (right side) has a gap with the column portion 122b, and the lower edge (bottom side) has a gap with the lower branch portion 124. In the planar member 120 according to the modification, by including the five surface portions 126, the planar member 120 ensures aesthetic design as a planar member when used in applications such as construction. In the modification, the widths of the two column portions 122a and 122b, the widths of the six branch portions 124, and the widths of the gaps are all designed to be approximately the same. Of course, these do not necessarily have to be identical, and for example, the width of the two column portions 122a and 122b may be wider than the other widths.

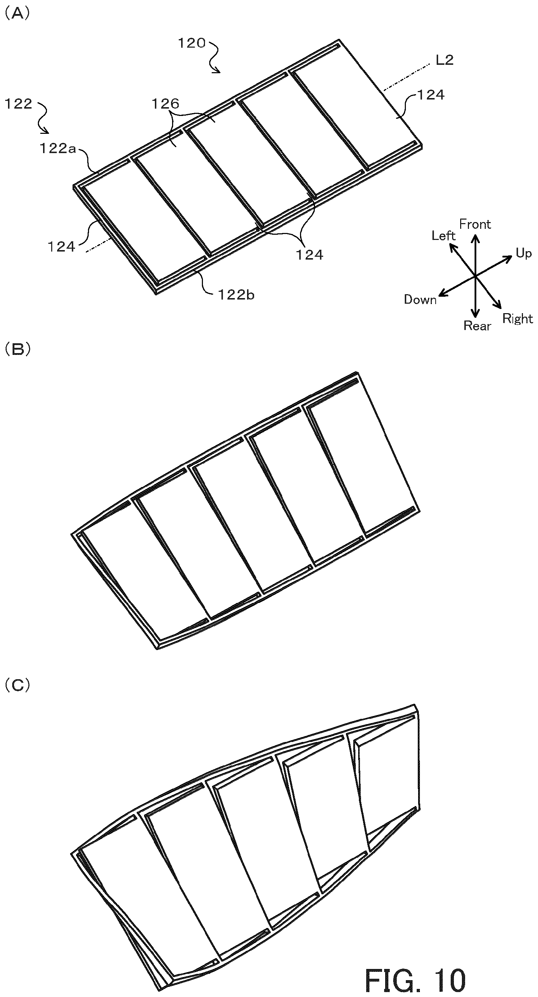

Fig. 10 is a diagram illustrating twisting behavior of the planar member 120 according to the modification. Fig. 10(A) shows the reference state of the planar member 120 (similar to Fig. 9), and Figs. 10 (B) and 10 (C) respectively show the states where the planar member 120 is twisted by 45 degrees and 90 degrees around the axis L2 from the reference state. When comparing Figs. 3 and 10, the deformation of the surface portions 26 of the planar member 20 according to the embodiment and the deformation of the surface portions 126 of the planar member 120 according to the modification are different as the planar members 20 and 120 are twisted. This difference arises from factors such as the difference in the connection width between the surface portions 26 and the branch portions 25 in the planar member 20, and the connection width between the surface portions 126 and the branch portions 124 in the planar member 120, as well as differences in the shapes and sizes of the individual surface portions 26 and 126.

Similar to the planar member 20 according to the embodiment, the planar member 120 according to the modification includes the two column portions 122 (122a, 122b) that extend in the up-down direction (longitudinal direction), which results in relatively high axial stiffness in the up-down direction. Additionally, similar to the planar member 20, the planar member 120 has a relatively small cross-sectional area for torsion around the axis L2 (primarily the cross-sectional area of the two column portions 122a and 122b and the six branch portions 124) compared to the plate member 20B (see Fig. 10), which results in relatively low torsional stiffness. That is, similar to the planar member 20, the planar member 120 ensures the axial stiffness in the up-down direction while reducing the torsional stiffness. Furthermore, the planar member 120 ensures aesthetic design as a planar member when used in applications such as construction.

Moreover, similar to the planar member 20, which includes the two column portions 22, the planar member 120 also includes the two column portions 122. This configuration increases the axial stiffness and bending stiffness with respect to bending deformation along the extending direction of the planar member 120, compared to the case where only single column portion is included, thus suppressing axial expansion or contraction and bending along the extending direction. Additionally, compared to the case where three or more column portions are included, this configuration reduces the torsional stiffness, making it easier to achieve relatively large torsion.

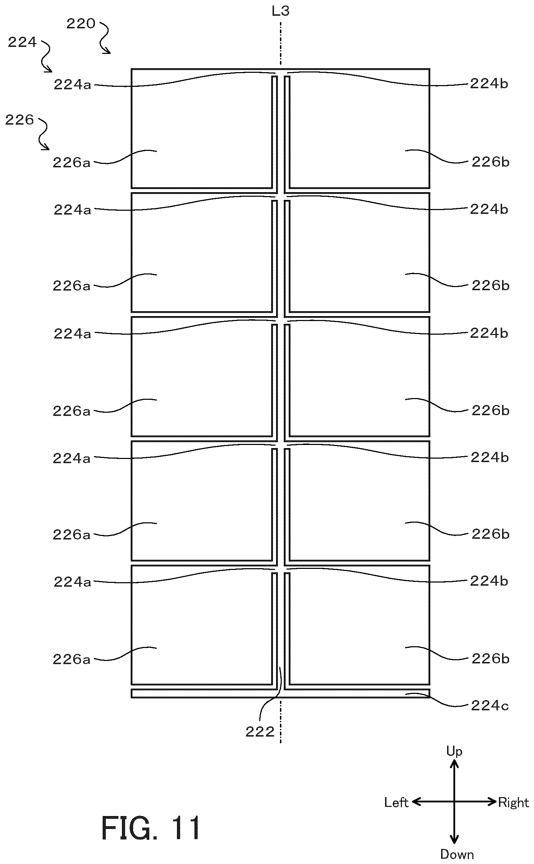

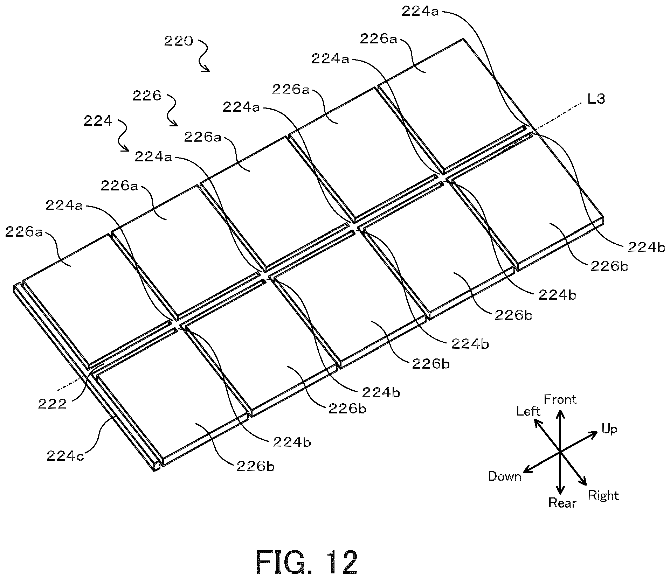

The planar member 220 according to the modification will be described. Fig. 11 is a front view of the planar member 220, and Fig. 12 is an external perspective view of the planar member 220. In Figs. 11 and 12, the axis L3 is a line that connects the centers of the front-rear direction and the left-right direction at any position in the up-down direction of the planar member 220. As shown in Figs. 11 and 12, the planar member 220 according to the modification is formed as a whole into a rectangular flat plate shape with a constant thickness (length in the front-rear direction) and includes single column portion 222, eleven branch portions 224, and ten surface portions 226.

The single column portion 222 extends in the up-down direction (longitudinal direction). Of the eleven branch portions 224, five branch portions 224a are arranged at intervals in the up-down direction, and extend from the column portion 222 to the left. Additionally, five branch portions 224b are arranged in pairs with the five branch portions 224a, at intervals in the up-down direction, and extend from the column portion 222 to the right. Furthermore, one branch portion 224c extends symmetrically in the left-right direction from the lower end of the column portion 222.

The ten surface portions 226 are each formed in the same rectangular shape. Of the ten surface portions 226, five surface portions 226a are arranged at intervals in the up-down direction (with gaps between them) to the left of the column portion 222, with the right edge (right side) of each surface portion 226a (specifically, the upper end) connected to the corresponding branch portion 224a. Additionally, five surface portions 226b are arranged in pairs with the five surface portions 226a in the left-right direction, at intervals in the up-down direction (with gaps between them) to the right of the column portion 222, with the left edge (left side) of each surface portion 226b (specifically, the upper end) connected to the corresponding branch portion 224b. The right edge (right side) of each surface portion 226a has a gap with the column portion 222, except at the upper end (where it connects to the branch portion 224a). Similarly, the left edge (left side) of each surface portion 226b has a gap with the column portion 222, except at the upper end (where it connects to the branch portion 224b) . In the planar member 220 according to the modification, by including the ten surface portions 226, the planar member 220 ensures aesthetic design as a planar member when used in applications such as construction. In this modification, the width of the single column portion 222 and the widths of the ten branch portions 224 (five branch portions 224a and five branch portions 224b) are designed to be approximately the same. Of course, they do not necessarily have to be identical, and for example, the width of the single column portion 222 may be wider than the other widths.

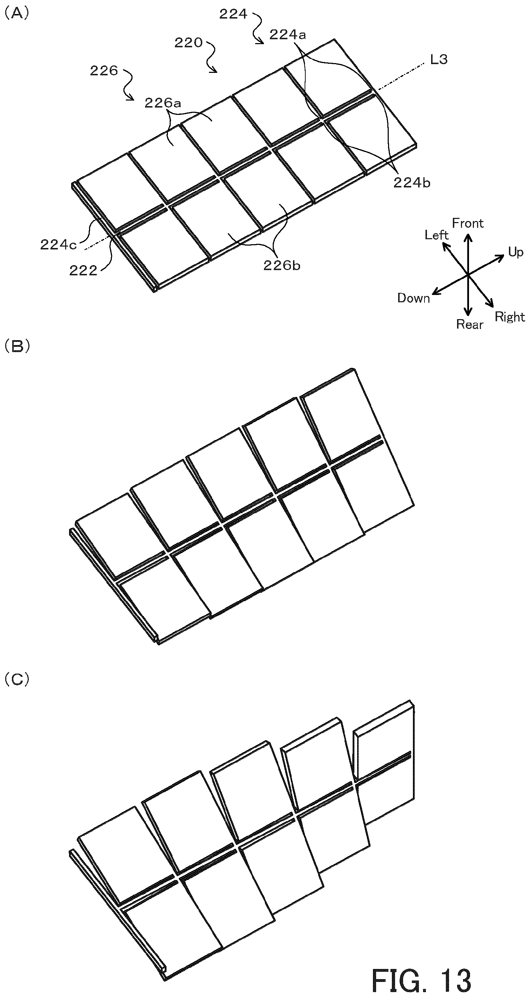

Fig. 13 is a diagram illustrating twisting behavior of the planar member 220 according to the modification. Fig. 13(A) shows the reference state of the planar member 220 (similar to Fig. 12), and Figs. 13(B) and 13(C) respectively show the states where the planar member 220 is twisted by 45 degrees and 90 degrees around the axis L3 from the reference state. When comparing Figs. 3 and 13, the deformation of the surface portions 26 of the planar member 20 according to the embodiment and the deformation of the surface portions 226 of the planar member 220 according to the modification are different as the planar members 20 and 220 are twisted. This difference arises from factors such as the difference in the connection width between the surface portions 26 and the branch portions 25 in the planar member 20, and the connection width between the surface portions 226 and the branch portions 224 in the planar member 220, as well as differences in the shapes and sizes of the individual surface portions 26 and 226.

Similar to the planar member 20 according to the embodiment, the planar member 220 according to the modification includes the single column portion 222 that extend in the up-down direction (longitudinal direction), which results in relatively high axial stiffness in the up-down direction. Additionally, similar to the planar member 20, the planar member 220 has a relatively small cross-sectional area for torsion around the axis L3 (primarily the cross-sectional area of the single column portion 222) compared to the plate member 20B (see Fig. 13), which results in relatively low torsional stiffness. That is, similar to the planar member 20, the planar member 220 ensures the axial stiffness in the up-down direction while reducing the torsional stiffness. Furthermore, the planar member 220 ensures aesthetic design as a planar member when used in applications such as construction.

The planar member 220 includes the single column portion 222. As a result, compared to the planar members 20 and 120, which include the plurality of column portions, axial stiffness and bending stiffness with respect to bending deformation along the extending direction of the planar member 220 are reduced. However, this configuration results in even lower torsional stiffness, making it easier to achieve relatively large torsion. Therefore, it is preferable to determine the number of column portions based on considerations such as the desired torsional stiffness, axial stiffness, bending stiffness, and aesthetic design of the planar member.

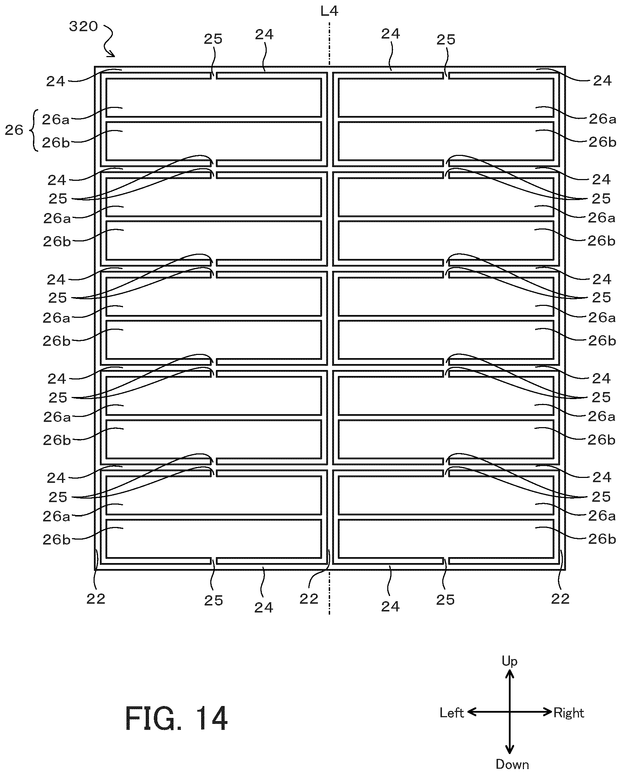

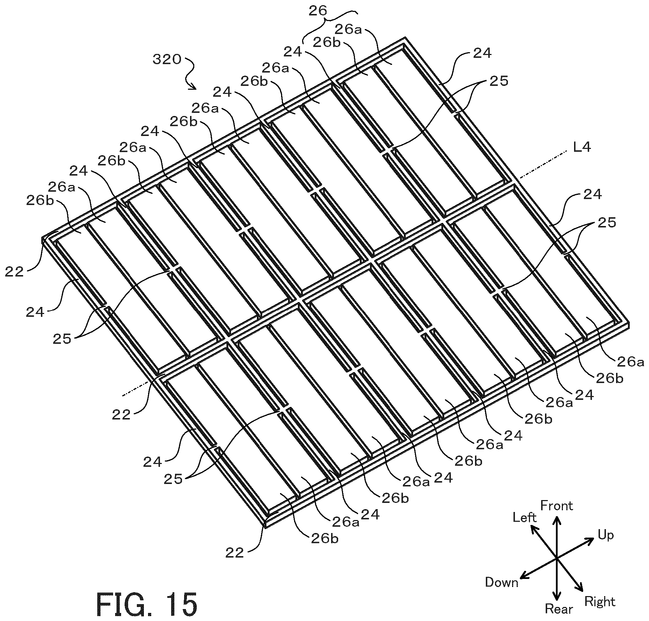

The planar member 320 according to the modification will be described. Fig. 14 is a front view of the planar member 320, and Fig. 15 is an external perspective view of the planar member 320. In Figs. 14 and 15, the axis L4 is a line that connects the centers of the front-rear direction and the left-right direction at any position in the up-down direction of the planar member 320. As shown in Figs. 14 and 15, the planar member 320 according to the modification is formed by arranging the two planar members 20 according to the embodiment, as shown in Figs. 1 and 2, side by side in the left-right direction, with a common column portion 22. This configuration includes three column portions 22, twelve branch portions 24, twenty branch portions 25, and twenty surface portions 26.

Similar to the planar member 20 according to the embodiment, the planar member 320 according to the modification includes the three column portions 22 extending in the up-down direction (longitudinal direction), which results in relatively high axial stiffness in the up-down direction. Additionally, similar to the planar member 20, the planar member 320 has a relatively small cross-sectional area for torsion around the axis L4 (primarily the cross-sectional area of the three column portions 22 and twelve branch portions 24) compared to the plate member 20B, which results in relatively low torsional stiffness. That is, similar to the planar member 20, the planar member 320 ensures the axial stiffness in the up-down direction while reducing the torsional stiffness. Furthermore, the planar member 320 ensures aesthetic design as a planar member when used in applications such as construction.

The planar member 320 includes the three column portions 22. As a result, compared to the planar member 20 and 120 that include the two column portions, or the planar member 220 that includes the single column portion, axial stiffness and bending stiffness with respect to bending deformation along the extending direction of the planar member 320 are higher, and torsional stiffness is also higher. Therefore, it is preferable to determine the number of column portions based on considerations such as the desired torsional stiffness, axial stiffness, bending stiffness, and aesthetic design of the planar member.

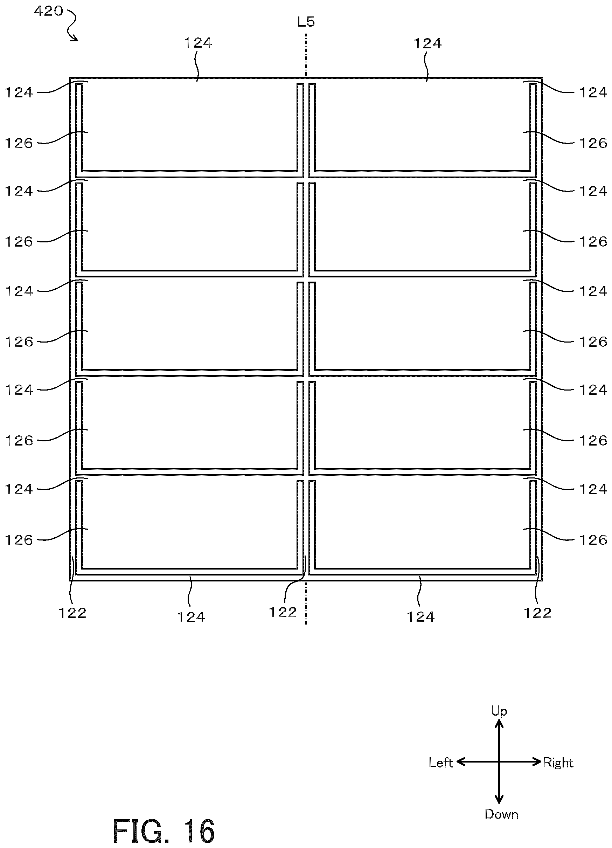

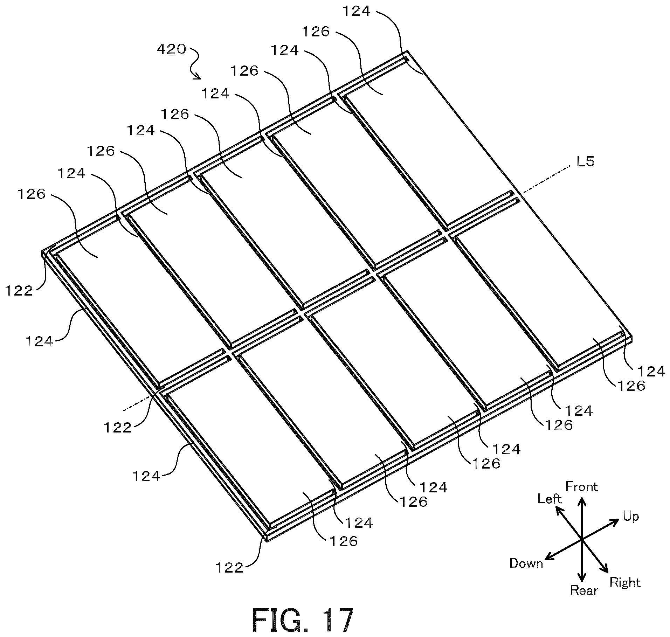

The planar member 420 according to the modification will be described. Fig. 16 is a front view of the planar member 420, and Fig. 17 is an external perspective view of the planar member 420. In Figs. 16 and 17, the axis L5 is a line that connects the centers of the front-rear direction and the left-right direction at any position in the up-down direction of the planar member 420. As shown in Figs. 16 and 17, the planar member 420 according to the modification is formed by arranging two planar members 120, as shown in Figs. 8 and 9, side by side in the left-right direction, with a common column portion 122. This configuration includes three column portions 122, twelve branch portions 124, and ten surface portions 126.

Similar to the planar member 20 according to the embodiment, the planar member 420 according to the modification includes the three column portions 122 extending in the up-down direction (longitudinal direction), which results in relatively high axial stiffness in the up-down direction. Additionally, similar to the planar member 20, the planar member 420 has a relatively small cross-sectional area for torsion around the axis L5 (primarily the cross-sectional area of the three column portions 122 and twelve branch portions 124) compared to the plate member 20B, which results in relatively low torsional stiffness. That is, similar to the planar member 20, the planar member 420 ensures the axial stiffness in the up-down direction while reducing the torsional stiffness. Furthermore, the planar member 420 ensures aesthetic design as a planar member when used in applications such as construction.

The planar member 420 includes the three column portions 122. As a result, compared to the planar member 20 and 120 that include the two column portions, or the planar member 220 that includes the single column portion, axial stiffness and bending stiffness with respect to bending deformation along the extending direction of the planar member 420 are higher, and torsional stiffness is also higher. Therefore, it is preferable to determine the number of column portions based on considerations such as the desired torsional stiffness, axial stiffness, bending stiffness, and aesthetic design of the planar member.

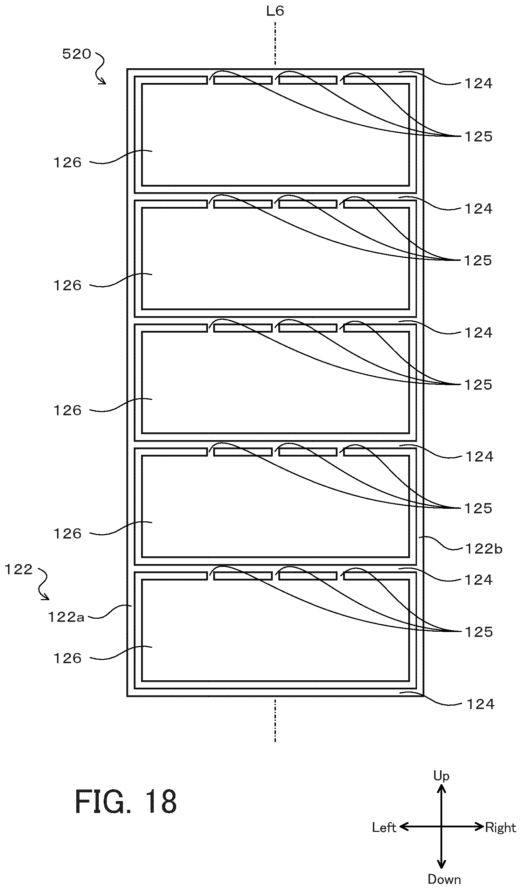

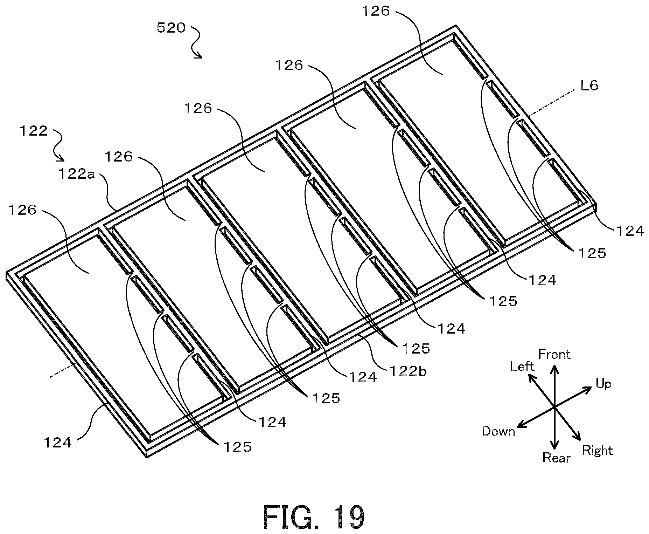

The planar member 520 according to the modification will be described. Fig. 18 is a front view of the planar member 520, and Fig. 19 is an external perspective view of the planar member 520. In Figs. 18 and 19, the axis L6 is a line that connects the centers of the front-rear direction and the left-right direction at any position in the up-down direction of the planar member 520. As shown in Figs. 18 and 19, the planar member 520 according to the modification differs from the planar member 120 shown in Figs. 8 and 9 in that, while the entire upper end (upper edge) of each surface portion 126 in the planar member 120 is directly connected to the upper branch portion 124, in the planar member 520, the upper end (upper edge) of each surface portion 126 is connected to the upper branch portion 124 via three branch portions 125. The three branch portions 125 are arranged at intervals in the left-right direction, with each extending in the up-down direction. In this modification, the widths of the two column portions 122a and 122b, the widths of the six branch portions 124, the widths and lengths of the fifteen branch portions 125 (three per set of five), and the widths of the gaps are all designed to be approximately the same. Of course, these do not necessarily have to be identical, and for example, the widths of the two column portions 122a and 122b may be wider than the other widths. Furthermore, the number of branch portions 125 is not limited to three, it may also be two, or even four or more.

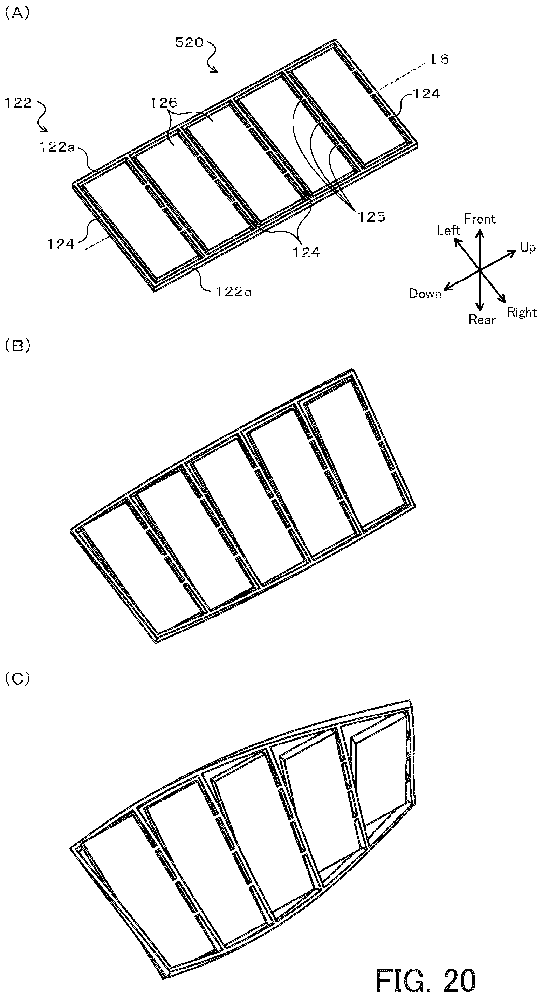

Fig. 20 is a diagram illustrating twisting behavior of the planar member 520 according to the modification. Fig. 20(A) shows the reference state of the planar member 520 (similar to Fig. 19), and Figs. 20(B) and 20(C) respectively show the states where the planar member 520 is twisted by 45 degrees and 90 degrees around the axis L6 from the reference state. When comparing Figs. 10 and 20, the deformation of the surface portions 126 of the planar member 120 according to the embodiment and the deformation of the surface portions 126 of the planar member 520 according to the modification are slightly different as the planar members 120 and 520 are twisted. This difference arises from the difference in the connection width between the surface portions 126 and the branch portions 124 in the planar member 120, and the connection width between each surface portion 126 and the branch portions 125 in the planar member 520.

Similar to the planar member 20 according to the embodiment, the planar member 520 according to the modification includes the two column portions 122a and 122b that extend in the up-down direction (longitudinal direction), which results in relatively high axial stiffness in the up-down direction. Additionally, similar to the planar member 20, the planar member 520 has a relatively small cross-sectional area for torsion around the axis L6 (primarily the cross-sectional area of the two column portions 122a and 122b and the six branch portions 124) compared to the plate member 20B (see Fig. 20), which results in relatively low torsional stiffness. That is, similar to the planar member 20, the planar member 520 ensures the axial stiffness in the up-down direction while reducing the torsional stiffness. Furthermore, the planar member 520 ensures aesthetic design as a planar member when used in applications such as construction.

In the planar member 120, the entire upper end (upper edge) of each surface portion 126 is directly connected to the upper branch portion 124, whereas in the planar member 520, the upper end (upper edge) of each surface portion 126 is connected to the upper branch portion 124 via the three branch portions 125. As a result, the connection width between the surface portion 126 and the branch portion 125 in the planar member 520 is narrower than the connection width between the surface portion 126 and the branch portion 124 in the planar member 120. Consequently, the torsional stiffness around the axis L6 of the planar member 520 is lower compared to the torsional stiffness around the axis L2 of the planar member 120. Therefore, depending on the desired torsional stiffness and aesthetic design of the planar member, either the planar member 120 or the planar member 520 can be selected.

In the embodiments and modifications, the surface portions 26, 126, and 226 of the planar members 20, 120, 220, 320, 420, and 520 are formed in a rectangular shape, with one edge of the four edges being connected to the corresponding branch portion. However, the surface portions 26, 126, and 226 may also be formed in polygonal shapes other than rectangles, or two or more edges of the surface portions may be connected to two corresponding branch portions. Furthermore, as long as the surface portions 26, 126, and 226 have edges that are connected to corresponding branch portions, they do not have to be in the form of polygons such as rectangles. Additionally, the surface portions 26, 126, and 226 may have arbitrary-shaped through holes formed partially, or may have a lattice pattern or other arbitrary designs formed over part or all of their surface. This allows the surface portions 26, 126, and 226 themselves to have aesthetic design.

In the embodiments and modifications, the planar members 20, 120, 220, 320, 420, and 520 are formed such that the up-down direction, or the direction of extension of the column portions 22, 122, and 222, is the longitudinal direction, and the left-right direction is the transverse direction. However, these may also be formed such that the lengths of the up-down direction and the left-right direction are approximately the same, or the length in the up-down direction is slightly shorter than the length in the left-right direction.

In the embodiments and modifications, the planar members 20, 120, 220, 320, 420, and 520 are in the form of rectangular flat plates (the reference state). However, these may also be in a twisted state around each axis, such as a 45 degree or 90 degree twist.

The following describes the correspondence relationship between the primary elements of the above embodiment and the primary elements of the disclosure described in the Summary. In the embodiment, the column portions 22a and 22b correspond to "one or more column portions", the six branch portions 24 and ten branch portions 25 correspond to "a plurality of branch portions", and the ten surface portions 26 correspond to "a plurality of surface portions".

The correspondence relationship between the primary components of the embodiment and the primary components of the disclosure, regarding which the problem is described in the Summary, should not be considered to limit the components of the disclosure, regarding which the problem is described in the Summary, since the embodiment is only illustrative to specifically describes the aspects of the disclosure, regarding which the problem is described in the Summary. In other words, the disclosure, regarding which the problem is described in the Summary, should be interpreted on the basis of the description in the Summary, and the embodiment is only a specific example of the disclosure, regarding which the problem is described in the Summary.

The aspect of the disclosure is described above with reference to the embodiment. The disclosure is, however, not limited to the above embodiment but various modifications and variations may be made to the embodiment without departing from the scope of the disclosure.

### [Note]

[1] A first planar member according to the present disclosure is a planar member that is integrally formed and capable of being used in a twisted state around an axis extending in a predetermined direction. The planar member includes one or more column portions extending in the predetermined direction, a plurality of branch portions, each connected to the one or more column portions, and a plurality of surface portions, each of which has a gap with the one or more column portions and is connected to any one(s) of the branch portions.
   The first planar member according to the present disclosure includes the one or more column portions extending in the predetermined direction, which ensures stiffness in the predetermined direction (axial stiffness). In addition, the planar member includes the plurality of surface portions, each connected to the one or more column portions via any one(s) of the branch portions, which results in a smaller cross-sectional area for torsion around the axis extending in the predetermined direction, as compared to a plate member, thereby reducing torsional stiffness. That is, it is possible to reduce torsional stiffness while ensuring axial stiffness in the predetermined direction. Furthermore, by including the plurality of surface portions, the planar member ensures aesthetic design as a planar member when used in applications such as construction.
[2] In the first planar member described above (the planar member described in [1]), the one or more column portions may include two or more of the column portions arranged at intervals between them, and the branch portions may be each connected to two adjacent column portions. Such a configuration allows for higher axial stiffness and bending stiffness with respect to bending deformation along the extending direction of the planar member, compared to the case where only a single column portion is included.
[3] In this case (the planar member described in [2]), the one or more column portions may include two column portions. Such a configuration allows for a reduction in the torsional stiffness around the axis extending in the predetermined direction, compared to the case where three or more column portions are included as the column portions.
[4, 5] In the first planar member described above (the planar member described in any one of [1] to [3]), the surface portions may each have an edge connected to the corresponding branch portion, and the entire edge may be connected to the corresponding branch portion. Alternatively, the surface portions may each have an edge connected to the corresponding branch portion, and only a portion of the edge may be connected to the corresponding branch portion. In the latter case, the connection area between the surface portion and the branch portion becomes smaller compared to the former case, resulting in a lower torsional stiffness around the axis extending in the predetermined direction. Therefore, based on the desired torsional stiffness and aesthetic design of the planar member, either the former or the latter configuration can be selected.
[6] In the first planar member described above (the planar member described in any one of [1] to [5]), each side of the branch portion in the predetermined direction may be connected to the surface portion.
[7] In the first planar member described above (the planar member described in any one of [1] to [6]), the planar member may be formed of wood.
[8] A second planar member according to the present disclosure is a planar member that is integrally formed. The planar member includes one or more column portions extending in a predetermined direction, a plurality of branch portions, each connected to the one or more column portions, and a plurality of surface portions, each of which has a gap with the one or more column portions and is connected to any one(s) of the branch portions. The planar member is in a twisted state around an axis extending in the predetermined direction.

The second planar member according to the present disclosure includes the one or more column portions extending in the predetermined direction, which ensures stiffness in the predetermined direction (axial stiffness). In addition, the planar member includes the plurality of surface portions, each connected to the one or more column portions via one of the branch portions, which results in a smaller cross-sectional area for torsion around the axis extending in the predetermined direction, as compared to a plate member, thereby reducing torsional stiffness. That is, it ispossible to reduce torsional stiffness while ensuring axial stiffness in the predetermined direction. Furthermore, by including the plurality of surface portions, the planar member ensures aesthetic design as a planar member when used in applications such as construction.

## Claims

1. A planar member that is integrally formed and capable of being used in a twisted state around an axis extending in a predetermined direction, the planar member comprising:
one or more column portions extending in the predetermined direction;
a plurality of branch portions, each connected to the one or more column portions; and
a plurality of surface portions, each of which has a gap with the one or more column portions and is connected to any one(s) of the branch portions.

2. The planar member according to Claim 1,
wherein the one or more column portions include two or more of the column portions arranged at intervals between them, and
the branch portions are each connected to two adjacent column portions.

3. The planar member according to Claim 2,
wherein the one or more column portions include two column portions.

4. The planar member according to Claim 1,
wherein the surface portions each have an edge connected to the corresponding branch portion, and the entire edge is connected to the corresponding branch portion.

5. The planar member according to Claim 1,
wherein the surface portions each have an edge connected to the corresponding branch portion, and only a portion of the edge is connected to the corresponding branch portion.

6. The planar member according to Claim 1,
wherein each side of the branch portion in the predetermined direction is connected to the surface portion.

7. The planar member according to Claim 1,
wherein the planar member is formed of wood.

8. A planar member that is integrally formed, comprising:
one or more column portions extending in a predetermined direction;
a plurality of branch portions, each connected to the one or more column portions; and
a plurality of surface portions, each of which has a gap with the one or more column portions and is connected to any one(s) of the branch portions;
wherein the planar member is in a twisted state around an axis extending in the predetermined direction.
